# EUROPÄISCHE PATENTSCHRIFT

(11) **EP 1 997 613 B1**
(45) Veröffentlichungstag und Bekanntmachung des Hinweises auf die Patenterteilung: **21.09.2011**
(21) Anmeldenummer: 08008472.6
(22) Anmeldetag: 06.05.2008
(51) Int. Cl.: B30B 7/02, B32B 37/10

(54) **Mehretagen-Laminierpresse**
Multi-level laminating press
Presse de lamination à plusieurs étages

(30) Priorität: 30.05.2007 DE 102007025380
(43) Veröffentlichungstag der Anmeldung: 03.12.2008
(73) Patentinhaber: Robert Bürkle GmbH, 72250 Freudenstadt (DE)
(72) Erfinder: Damm, Norbert, 76689 Karlsdorf-Neuthard (DE); Metzger, Dagmar, 76187 Karlsruhe (DE)
(74) Vertreter: Lemcke, Brommer & Partner

(56) Entgegenhaltungen:
- EP-A2- 1 609 597

## Beschreibung

Die Erfindung betrifft eine Mehretagen-Laminierpresse zum Laminieren von im Wesentlichen plattenförmigen Werkstücken unter Druck- und Wärmeeinwirkung, insbesondere von Photovoltaik-Modulen, nach dem Oberbegriff des Anspruchs 1.

Demnach umfasst eine Mehretagen-Laminierpresse der vorliegenden Art eine Anzahl von übereinander angeordneten, gegeneinander bewegbaren Heizplatten, wobei die Heizplatten normalerweise alle gleichzeitig oder in Gruppen bewegt werden, um die Presse zu öffnen und zu schließen. Gegebenenfalls können die Heizplatten jedoch auch einzeln bewegt werden, um jeweils einzelne Pressenkammern zu öffnen und zu schließen. Ferner umfasst eine Mehretagen-Laminierpresse der vorliegenden Art eine Anzahl von Förderbändern, die mit jeweils einem Obertrum und einem Untertrum um die Heizplatten umlaufen. Die Werkstücke werden dann durch die Umlaufbewegung der Förderbänder auf dem Obertrum aufliegend in die Presse eingefahren und aus dieser wieder herausgefahren.

Eine Mehretagen-Laminierpresse der vorliegenden Art umfasst außerdem Dichtungselemente zur Ausbildung von Vakuumkammern im Raum zwischen jeweils einer ersten Heizplatte und einer jeweils benachbart darüber angeordneten zweiten Heizplatte bei geschlossener Presse, wobei die Dichtungselemente zwischen den Heizplatten und den Förderbändern angeordnet sind. Dies bedeutet, dass entweder separate Dichtungselemente vorgesehen sind, oder aber die Förderbänder selbst gegen die Heizplatten abdichten. Bei geschlossener Presse liegt das Untertrum des zweiten Förderbandes der zweiten Heizplatte auf dem Obertrum des ersten Förderbandes der ersten Heizplatte auf, während das zu laminierende Werkstück zwischen dem Obertrum des ersten Förderbandes und dem Untertrum des zweiten Förderbandes innerhalb der Vakuumkammer angeordnet ist. Die Vakuumkammern können evakuiert und/oder mit Druck beaufschlagt werden.

Laminierpressen zum Laminieren von insbesondere Photovoltaikmodulen sind beispielsweise aus der WO 2006/128699 A2 bekannt. Über einer Heizplatte ist ein Oberteil mit einem Dichtrahmen angeordnet, welcher Dichtrahmen eine Vakuumkammer umschreibt, die bei geschlossener Presse durch dichtes Auflegen des Dichtrahmens auf die Heizplatte evakuiert werden kann. Über den Dichtrahmen ist eine Membran gespannt, die die Vakuumkammer abschließt und als Andrückmittel dient, um den für die Laminierung des Werkstücks erforderlichen Druck gegen die Heizplatte aufzubringen. Hierfür wird das bei geschlossener Presse unter der Membran, zwischen dieser und der Heizplatte liegende Volumen evakuiert, wodurch sich die Membran eng an das Werkstück anlegt. Bedarfsweise wird außerdem eine durch Abdichten des Dichtrahmens gegen die obere Pressenplatte gebildete, nach unten von der Membran begrenzte Druckkammer mit Druckluft beaufschlagt. Gerade bei der Laminierung von Photovoltaik-Modulen ist es sehr vorteilhaft, mit einer solchen Membran zu arbeiten, da diese Module meist eine unebene Oberfläche aufweisen. Gleichwohl ist es von größter Wichtigkeit, dass das Laminieren blasenfrei erfolgt und keine Undichtigkeiten entstehen, durch die Feuchtigkeit in die Photovoltaik-Module eindringen könnte.

Zur Laminierung von Photovoltaik-Modulen werden in der Regel sehr stark adhäsive Klebstoffe verwendet. Daher ist es im Stand der Technik üblich, die Membran durch eine zwischen diese und das Werkstück gelegte Trennfolie zu schützen. Denn Klebstoffreste an der Membran, welche diese unbrauchbar machen können, oder zumindest das Arbeitsergebnis verschlechtern, können kaum mit vertretbarem Aufwand von der Membran entfernt werden.

Gerade bei Photovoltaik-Modulen, deren Ausbeute an elektrischer Energie direkt von der Fläche abhängt, beeinflusst die Verarbeitungskapazität pro Flächeneinheit bei zeitlich festgelegten Prozessen wie dem des Laminierens unmittelbar die Kosteneffizienz. Dementsprechend bietet es Vorteile, eine Mehretagen-Laminierpresse vorzusehen, bei der mehrere Pressenetagen übereinander angeordnet sind. Hierdurch erhöht sich die zu verarbeitende Flächenkapazität, ohne den Flächenbedarf am Produktionsstandort zu erhöhen.

Eine Mehretagen-Laminierpresse mit Einzeletagen der eben beschriebenen Art ist in der EP 1 609 597 A2 beschrieben. Allerdings ist hier das Problem des Verklebens der Membranen nicht befriedigend gelöst; denn um dieses zu verhindern, müssen Trennfolien von Hand auf die Werkstücke aufgelegt werden. Dies macht den Prozess jedoch naturgemäß wieder langsamer und aufwendiger, wodurch die Vorteile der Mehretagen-Presse wieder relativiert werden.

Der vorliegenden Erfindung liegt die Aufgabe zugrunde, eine Mehretagen-Laminierpresse der eingangs genannten Art zu vereinfachen und dementsprechend die Effizienz des Prozesses zu erhöhen und den konstruktiven Aufwand zu verringern.

Gelöst ist diese Aufgabe durch eine Mehretagen-Laminierpresse mit der Merkmalskombination des Anspruchs 1. Bevorzugte Weiterbildungen und Ausgestaltungen der erfindungsgemäßen Mehretagen-Laminierpresse sind in den Ansprüchen 2 bis 9 niedergelegt.

Der Kern der vorliegenden Erfindung besteht also darin, dass die bisher als Andrückmittel für unverzichtbar gehaltene Membran in einer Laminierpresse der vorliegenden Art weggelassen wird. Die Vakuumkammern werden stattdessen durch einerseits die erste Heizplatte und andererseits das Untertrum des zweiten Förderbandes, oder aber durch einerseits die zweite Heizplatte und andererseits das Obertrum des ersten Förderbandes begrenzt. Als Andrückmittel, das durch Vakuum und/oder Druckbeaufschlagung an das Werkstück angedrückt wird und dieses entweder an die untere oder die obere Heizplatte einer Pressenetage drückt, wird also keine in einem Dichtungsrahmen eingespannte Membran mehr verwendet, sondern deren Funktion wird durch die umlaufenden Förderbänder zusätzlich übernommen. Da die Förderbänder umlaufend ausgestaltet sind, ist eine Reinigung derselben von außerhalb der Pressenetagen sehr leicht möglich, so dass außerdem auf eine Trennfolie verzichtet werden kann.

Es ist sogar möglich, eine herkömmliche Mehretagenpresse zu einer Mehretagen-Laminierpresse nach der vorliegenden Erfindung umzurüsten, indem Dichtungselemente, insbesondere Dichtungsrahmen zur Ausbildung von Vakuumkammern nachgerüstet werden, und zwar naturgemäß direkt an zumindest einer Heizplatte, so dass das zugeordnete Förderband über den Dichtungselementen verläuft und somit beide Förderbänder benachbarter Heizplatten die gebildete Vakuumkammer durchlaufen.

Die Heizplatten sind hierfür vorzugsweise mit Ausnehmungen bzw. Vertiefungen versehen, so dass die Dichtungselemente nicht unbedingt die Form eines Rahmens aufweisen müssen, und dennoch genügend Volumen in den Vakuumkammern vorhanden ist. Je nach Ausgestaltung der vorliegenden Erfindung ist es zweckmäßig, wenn entweder die obere Heizplatte an ihrer Unterseite mit einer Ausnehmung versehen ist, oder die untere Heizplatte an ihrer Oberseite, oder aber beide Heizplatten einer Pressenetage Ausnehmungen aufweisen. Die Kontur der Vakuumkammern sowie gegebenenfalls von Druckkammern kann im Rahmen der vorliegenden Erfindung also in die Oberseiten und/oder Unterseiten der Heizplatten eingearbeitet sein, einschließlich der erforderlichen Dichtungen, soweit nicht die Förderbänder selbst gegen die Umgebung der Kammern in den Heizplatten abdichten. Alternativ oder zusätzlich sind auch aufgesetzte Dichtrahmen möglich, um die Vakuumkammern und deren Abdichtungen sowie gegebenenfalls zusätzliche Druckkammern zu bilden.

Besondere Vorteile ergeben sich, wenn die Obertrums der Förderbänder andere Materialeigenschaften als die Untertrums aufweisen. Denn die Obertrums der Förderbänder dienen zum aufliegenden Transport der zu laminierenden Werkstücke, während die Untertrums zumindest dann, wenn die Förderbänder zum Ein- und Ausfördern der Werkstücke jeweils einen ganzen Umlauf um die Heizplatte ausführen, lediglich zur Vervollständigung der Förderbänder und nicht direkt zum Transport der Werkstücke dienen. Dementsprechend können die Untertrums weicher und elastischer ausgebildet sein und so in ihrer erfindungsgemäßen Funktion als Andrückmittel beim Laminieren optimiert sein. An dieser Stelle ist anzumerken, dass sich überraschenderweise herausgestellt hat, dass die bei Membranpressen verwendeten hochelastischen Membrane als Andrückmittel bei Werkstücken wie Photovoltaik-Modulen dem erfindungsgemäß verwendeten Transportband unterlegen sind. Denn die hochelastischen Membrane legen sich (was sie beispielsweise bei der Möbelplattenherstellung ausdrücklich sollen) sehr eng und weitgehend auch an den Rändern der Werkstücke an diese an. Hierdurch ergeben sich in den Randbereichen der Werkstücke erhöhte Druckbelastungen, was gerade bei Photovoltaik-Modulen zu Glasbruch oder Bruch der randseitigen Solarzellen führen kann.

Wenn die Förderbänder wie eben erwähnt aus zwei Teilen mit unterschiedlichen Materialeigenschaften bestehen, sind diese beiden Teile vorzugsweise mittels mindestens zweier lösbarer Verbinder, beispielsweise Förderbandschlössern aneinander befestigt. Die einfache Lösbarkeit dieser Bandverbinder stellt nicht nur eine einfache Fertigung dieses speziellen Förderbandes sicher, sondern ermöglicht bei Bedarf auch, einen Teil des Förderbandes auszuwechseln, ohne den anderen Teil gleichzeitig mit ersetzen zu müssen.

Die umlaufenden Fördebänder der erfindungsgemäßen Mehretagen-Laminierpresse können mit Spannelementen versehen sein, die die Förderbänder beim Umlauf um die Heizplatten spannen. Dies können beispielsweise Kolben-Zylinder-Einheiten sein, die eine Umlenkrolle an der Stirnseite einer Heizplatte zur Heizplatte hin und von dieser weg bewegen können, um das um die Umlenkrolle laufende Förderband im Ergebnis spannen und entspannen zu können. Im Rahmen der vorliegenden Erfindung ist es dann bevorzugt, die Förderbänder beim Umlauf um die Heizplatten zu spannen, während sie beim Schließen der Presse entspannt werden. Das Entspannen der Förderbänder optimiert deren Funktion als Andrückmittel beim Laminieren der Werkstücke nochmals.

Um zu ermöglichen, dass der eigentliche Produktraum zwischen dem Obertrum des ersten Förderbandes und dem Untertrum des zweiten Förderbandes einer Pressenetage über zumindest eine der beiden beteiligten Heizplatten evakuiert werden kann, ist es zweckmäßig, wenn entweder das Untertrum des zweiten Förderbandes oder das Obertrum des ersten Förderbandes die Dichtelemente nicht ganzflächig überdeckt, so dass Luft seitlich neben dem entsprechenden Förderband herausgesaugt werden kann, und/oder mit Saugöffnungen, beispielsweise einer Perforation versehen ist, um Luft durch das entsprechende Förderband hindurch absaugen zu können. Soweit nicht nur mit einer Vakuumkammer gearbeitet wird, sondern auch mit einer Druckbeaufschlagung des Andrückmittels, ist es allerdings notwendig, dass das jeweils andere beteiligte Förderband einer Pressenetage die Vakuumkammer ganzflächig überdeckt und insbesondere auch an den Dichtelementen anliegt, so dass eine gasdichte Druckkammer gebildet wird.

Soweit die Förderbänder der erfindungsgemäßen Mehretagen-Laminierpresse aus zwei unterschiedlichen Teilen bestehen, ist ein jeweils ganzer Umlauf der Förderbänder zum Ein- und Ausfördern der Werkstücke, also eine halbe Leerfahrt zwischen dem Ausfördern und dem Einfördern von Werkstücken notwendig. Jedoch auch dann, wenn die Förderbänder herkömmlich ausgestaltet sind, bietet ein solcher ganzer Umlauf um die Heizplatten Vorteile. Dies zum einen aufgrund der thermischen Gegebenheiten, zum anderen jedoch auch wegen der Möglichkeit, die Förderbänder und hier insbesondere die Untertrums, die erfindungsgemäß das Andrückmittel beim Laminieren bilden, beim Umlauf zu reinigen. Dies kann beispielsweise mit einer Reinigungsvorrichtung geschehen, die insbesondere an einer Stirnseite einer Heizplatte angeordnet ist und an der das Förderband beim Umlauf um die Heizplatte vorbeibewegt wird. Selbstverständlich können auch beide Stirnseiten einer Heizplatte mit solchen Reinigungsvorrichtungen versehen sein, wobei gegebenenfalls jede Heizplatte mit eigenen Reinigungsvorrichtungen versehen ist, oder aber die Reinigungsvorrichtungen jeweils mehreren Heizplatten zugeordnet sind.

Ein Ausführungsbeispiel der vorliegenden Erfindung wird im Folgenden anhand der beigefügten Zeichnungen näher beschrieben und erläutert. Es zeigen:
- Figur 1: eine schematische seitliche Teildarstellung einer geöffneten Mehretagen-Laminierpresse;
- Figur 2: eine schematische seitliche Teildarstellung einer geschlossenen Mehretagen-Laminierpresse;

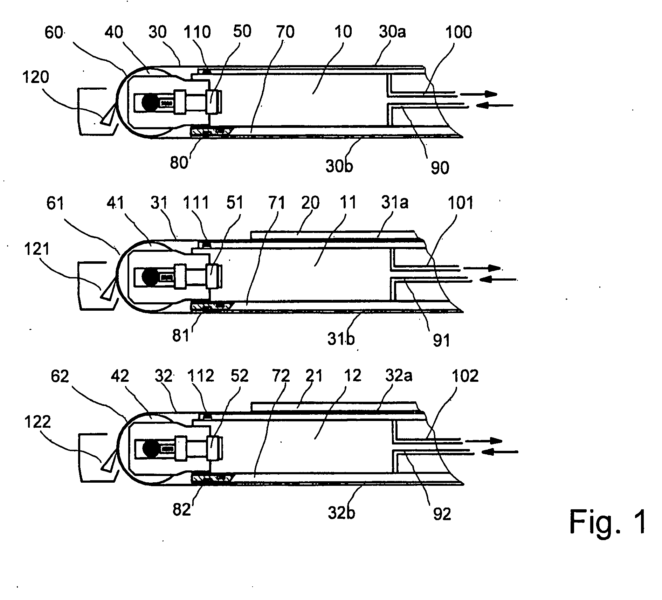

Figur 1 zeigt eine schematische seitliche Teildarstellung von drei Heizplatten 10, 11 und 12 einer Mehretagen-Laminierpresse mit einer Vielzahl von Heizplatten. Die dargestellten drei Heizplatten 10, 11, 12 bilden zwischen sich zwei Pressenetagen, in denen sich jeweils ein zu laminierendes Werkstück 20, 21 befindet.

Um die Heizplatten 10, 11, 12 läuft jeweils ein Förderband 30, 31, 32 um, und zwar um Umlenkrollen 40, 41, 42, die über jeweils eine Kolben-Zylinder-Einheit 50, 51, 52 an den Stirnseiten der Heizplatten 10, 11, 12 befestigt sind und durch Heranfahren an diese Stirnseiten die Förderbänder 30, 31, 32 entspannen können und umgekehrt. Die Förderbänder 30, 31, 32 bestehen jeweils aus einem als Transportband ausgebildeten Obertrum 30a, 31 a, 32a und einem demgegenüber elastischer und breiter ausgebildeten Untertrum 30b, 31 b, 32b, welche beiden Teile mit zwei lösbaren Bandverbindern 60, 61, 62 (von denen in dieser Darstellung naturgemäß jeweils nur einer sichtbar ist) miteinander verbunden sind.

Die Oberseiten der Heizplatten 10, 11, 12 sind im vorliegend dargestellten Ausführungsbeispiel eben ausgestaltet und mit hier nur symbolisch dargestellten Absaugöffnungen 100, 101, 102 versehen, um den Produktraum zwischen dem Obertrum 31 a eines ersten Förderbands 31 und dem Untertrum 30b eines zweiten Förderbandes 30 evakuieren zu können. Zu diesem Zweck ist das Obertrum 31 a des ersten Förderbandes 31 (wie auch die anderen Obertrums 30a, 32a) schmaler ausgebildet als die Untertrums 30b, 31 b, 32b, so dass eine Evakuierung des Produktraums über die Absaugöffnungen 100, 101, 102 durch die Heizplatten 10, 11, 12 hindurch möglich ist. Dementsprechend sind die Oberseiten der Heizplatten 10, 11, 12 außerdem mit Dichtrahmen 110, 111, 112 versehen, so dass unterhalb der Untertrums 30b, 31 b, 32b und von diesen begrenzt gasdichte Vakuumkammern gebildet werden. Durch Evakuieren dieser Vakuumkammern legen sich die Untertrums 30b, 31b dicht an die Werkstücke 20, 21 an und drücken diese gegen die Heizplatten 11, 12, wobei gleichzeitig eine Blasenbildung beim Laminieren verhindert wird.

Zur Bildung von Druckkammern sind jeweils in die Unterseiten der Heizplatten 10, 11, 12 Ausnehmungen 70, 71, 72 eingearbeitet, sowie Dichtungsrahmen 80, 81, 82 aufgesetzt. Hierdurch bildet sich im Zusammenwirken mit den Untertrums 30b, 31 b, 32b der Förderbänder 30, 31, 32 jeweils eine Druckkammer, die über symbolisch dargestellte Druckleitungen 90, 91, 92 mit Druckgas beaufschlagt wird. Die Untertrums 30b, 31 b, 32b der Förderbänder sind relativ breit gehalten, so dass sie die Dichtrahmen 80, 81, 82 rundum überdecken.

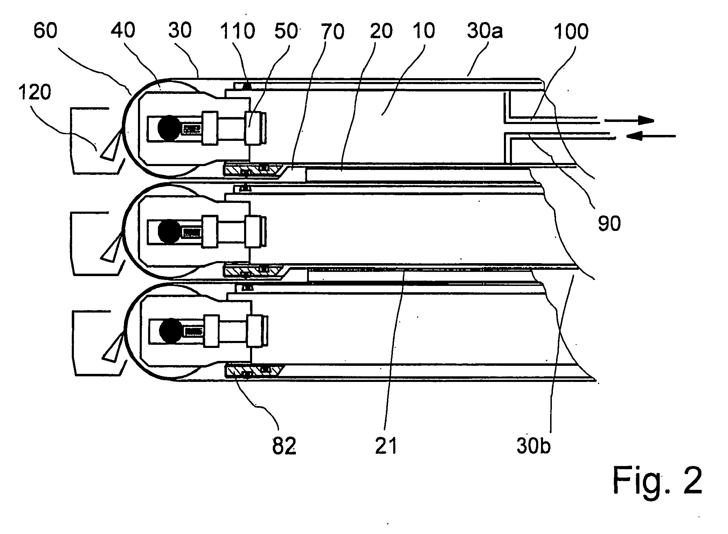

Figur 2 ist eine Darstellung wie Figur 1, allerdings bei geschlossener Mehretagen-Laminierpresse. Wie anhand dieser Zeichnung verdeutlicht wird, legen sich die Untertrums 30b, 31 b, 32b der Förderbänder 30, 31, 32 beim Schließen der Mehretagen-Laminierpresse auf die Obertrums 30a, 31 a, 32a der jeweils benachbarten Förderbänder bzw. auf die zwischenliegenden Werkstücke 20, 21 auf. Gleichzeitig dichten die Dichtungselemente 80, 81, 82 und 110, 111, 112 mit den dazwischenliegenden Förderbändern, 30, 31, 32 rundum ab, um eine Vakuumkammer und eine Druckkammer zu bilden. Diese Kammern werden von den Untertrums 30b, 31 b, 32b der Förderbänder gasdicht unterteilt, so dass die obere Hälfte der Kammern mit Druckgas beaufschlagt werden kann, nachdem die untere Hälfte der Kammern evakuiert wurde. Das teflonisierte, wenig elastische, dünne Untertrum 30b eines Förderbandes 30 übernimmt also statt einer äußerst elastischen Membran - die erfindungsgemäß entfällt - die Funktion des Andrückmittels beim Laminieren des Werkstücks 20.

An den Umlenkrollen 40, 41, 42 jedes Förderbandes 30, 31, 32 ist jeweils eine Reinigungsvorrichtung 120 121, 122 vorgesehen, beispielsweise eine rotierende Reinigungsbürste oder - wie hier dargestellt - eine Rakel. Beim Ausfahren der Werkstücke 20, 21 nach dem Laminierprozess und nach dem Öffnen der Mehretagen-Laminierpresse bewegen sich die Untertrums 30b, 31 b, 32b der Förderbänder 30, 31, 32 an den Reinigungsvorrichtungen 120, 121, 122 vorbei und werden dort von etwaigen Klebstoffresten befreit. Wenn die Werkstücke 20, 21 ausgefahren sind, liegen die Untertrums 30b, 31 b, 32b jeweils an der Oberseite der Heizplatten 10, 11, 12 so dass nochmals ein halber Umlauf der Förderbänder 30, 31, 32 als Lehrfahrt nötig ist, um ein Einfahren von weiteren Werkstücken zu ermöglichen. Hierbei bewegen sich dann auch die Obertrums 30a, 31a, 32a der Förderbänder 30, 31, 32 an den Reinigungsvorrichtungen 120, 121, 122 vorbei, so dass auch diese von etwaigen Klebstoffresten befreit werden. Zusätzliche Trennfolien werden hierdurch überflüssig.

## Patentansprüche

1. Mehretagen-Laminierpresse zum Laminieren von im Wesentlichen plattenförmigen Werkstücken (20, 21) unter Druck- und Wärmeeinwirkung, umfassend:
- eine Anzahl von übereinander angeordneten, gegeneinander bewegbaren Heizplatten (10, 11, 12);
- eine Anzahl von um die Heizplatten (10, 11, 12) umlaufenden Förderbändern (30, 31, 32) mit jeweils einem Obertrum (30a, 31 a, 32a) und einem Untertrum (30b, 31 b, 32b);
- zwischen den Heizplatten (10, 11, 12) und den Förderbändern (30, 31, 32) angeordnete Dichtungselemente (80, 81, 82, 110, 111, 112) zur Ausbildung von Vakuumkammern zwischen jeweils einer ersten Heizplatte (11) und einer jeweils benachbart darüber angeordneten zweiten Heizplatte (10) bei geschlossener Presse, während das Untertrum (30b) des zweiten Förderbandes (30) der zweiten Heizplatte (10) auf dem Obertrum (31 a) des ersten Förderbandes (31) der ersten Heizplatte (11) aufliegt und das zu laminierende Werkstück (20) zwischen dem Obertrum (31a) des ersten Förderbandes (31) und dem Untertrum (30b) des zweiten Förderbandes (30) in der Vakuumkammer angeordnet ist; und
- Mittel (90, 91, 92, 100, 101, 102) zum Druckbeaufschlagen und/oder Evakuieren der Vakuumkammern,
**dadurch gekennzeichnet,**
**dass** die Vakuumkammern jeweils ohne Zwischenschaltung einer Membran durch einerseits die erste Heizplatte (11) und andererseits das Untertrum (30b) des zweiten Förderbandes (30), oder aber durch einerseits die zweite Heizplatte (10) und andererseits das Obertrum (31a) des ersten Förderbandes (31) begrenzt werden.

2. Mehretagen-Laminierpresse nach Anspruch 1,
**dadurch gekennzeichnet,**
**dass** die Heizplatten (10, 11, 12) mit Ausnehmungen (70, 71, 72) zur Bildung der Vakuumkammern und/oder von Druckkammern versehen sind.

3. Mehretagen-Laminierpresse nach einem der Ansprüche 1 oder 2,
**dadurch gekennzeichnet,**
**dass** die Obertrums (30a, 31a, 32a) der Förderbänder (30, 31, 32) andere Materialeigenschaften als deren Untertrums (30b, 31b, 32b) aufweisen.

4. Mehretagen-Laminierpresse nach mindestens einem der Ansprüche 1 bis 3,
**dadurch gekennzeichnet,**
**dass** die Obertrums (30a, 31,a 32a) der Förderbänder (30, 31, 32) andere geometrische Abmessungen in der Dicke und/oder Breite als deren Untertrums (30b, 31b, 32b) aufweisen.

5. Mehretagen-Laminierpresse nach einem der Ansprüche 3 oder 4,
**dadurch gekennzeichnet,**
**dass** die Untertrums (30b, 31 b, 32b) und die Obertrums (30a, 31 a, 32a) der Förderbänder jeweils mittels wenigstens zweier lösbarer Bandverbinder (60, 61, 62) aneinander befestigt sind.

6. Mehretagen-Laminierpresse nach mindestens einem der Ansprüche 1 bis 5,
**dadurch gekennzeichnet,**
**dass** die Förderbänder (30, 31, 32) mit Spannelementen (40, 41, 42, 50, 51, 42) versehen sind, die die Förderbänder (30, 31, 32) beim Umlauf um die Heizplatten (10, 11, 12) spannen, während sie die Förderbänder (10, 11, 12) beim Schließen der Presse entspannen.

7. Mehretagen-Laminierpresse nach mindestens einem der Ansprüche 1 bis 6,
**dadurch gekennzeichnet,**
**dass** entweder das Untertrum (30b) des zweiten Förderbandes (30) oder das Obertrum (31 a) des ersten Förderbandes (31) jeder Pressenetage die Dichtelemente (80, 111) nicht ganzflächig überdeckt und/oder mit Saugöffnungen versehen ist.

8. Mehretagen-Laminierpresse nach mindestens einem der Ansprüche 1 bis 7,
**dadurch gekennzeichnet,**
**dass** die Förderbänder (30, 31, 32) zum Ein- und Ausfördern der Werkstücke (20, 21) einen ganzen Umlauf um die Heizplatten (10, 11, 12) ausführen.

9. Mehretagen-Laminierpresse nach mindestens einem der Ansprüche 1 bis 8,
**dadurch gekennzeichnet,**
**dass** mindestens eine Reinigungsvorrichtung (120, 121, 122) vorgesehen ist, an der sich die Förderbänder (30, 31, 32) beim Umlauf um die Heizplatten (10, 11, 12) vorbeibewegen.

## Claims

1. Multi-level laminating press for laminating substantially plate-like workpieces (20, 21) under the action of pressure and heat, comprising:
- a number of heating plates (10, 11, 12) arranged one above the other and movable relative to one another;
- a number of conveyor belts (30, 31, 32) circulating around the heating plates (10, 11, 12), each having an upper run (30a, 31a, 32a) and a lower run (30b, 31 b, 32b);
- sealing elements (80, 81, 82, 110, 111, 112) arranged between the heating plates (10, 11, 12) and the conveyor belts (30, 31, 32) for forming, when the press is closed, vacuum chambers between a first heating plate (11) and an adjacent second heating plate (10) arranged above the first heating plate, while the lower run (30b) of the second conveyor belt (30) of the second heating plate (10) rests on the upper run (31 a) of the first conveyor belt (31) of the first heating plate (11) and the workpiece (20) to be laminated is arranged between the upper run (31 a) of the first conveyor belt (31) and the lower run (30b) of the second conveyor belt (30) in the vacuum chamber; and
- means (90, 91, 92, 100, 101, 102) for pressurising and/or evacuating the vacuum chambers,
**characterised in that**
the vacuum chambers, in each case without the intermediate arrangement of a membrane, are bounded on one side by the first heating plate (11) and on the other side by the lower run (30b) of the second conveyor belt (30), or on one side by the second heating plate (10) and on the other side by the upper run (31 a) of the first conveyor belt (31).

2. Multi-level laminating press according to claim 1,
**characterised in that**
the heating plates (10, 11, 12) are provided with openings (70, 71, 72) for forming the vacuum chambers and/or pressure chambers.

3. Multi-level laminating press according to either one of claims 1 and 2,
**characterised in that**
the upper runs (30a, 31a, 32a) of the conveyor belts (30, 31, 32) have material properties different from those of the lower runs (30b, 31 b, 32b).

4. Multi-level laminating press according to at least one of claims 1 to 3,
**characterised in that**
the upper runs (30a, 31a, 32a) of the conveyor belts (30, 31, 32) have different geometric dimensions in terms of thickness and/or width from the lower runs (30b, 31 b, 32b).

5. Multi-level laminating press according to either one of claims 3 and 4,
**characterised in that**
the lower runs (30b, 31 b, 32b) and the upper runs (30a, 31a, 32a) of the conveyor belts are in each case attached to one another by means of at least two releasable belt connectors (60, 61, 62).

6. Multi-level laminating press according to at least one of claims 1 to 5,
**characterised in that**
the conveyor belts (30, 31, 32) are provided with tensioning elements (40, 41, 42, 50, 51, 52) which tension the conveyor belts (30, 31, 32) on circulation around the heating plates (10, 11, 12), while they release the tension on the conveyor belts (10, 11, 12) when the press is closed.

7. Multi-level laminating press according to at least one of claims 1 to 6,
**characterised in that**
either the lower run (30b) of the second conveyor belt (30) or the upper run (31a) of the first conveyor belt (31) of each press level does not cover the entire area of the sealing elements (80, 111) and/or is provided with suction openings.

8. Multi-level laminating press according to at least one of claims 1 to 7,
**characterised in that**
for introduction and discharge of the workpieces (20, 21) the conveyor belts (30, 31, 32) perform an entire circuit around the heating plates (10, 11, 12).

9. Multi-level laminating press according to at least one of claims 1 to 8,
**characterised in that**
at least one cleaning device (120, 121, 122) is provided, past which the conveyor belts (30, 31, 32) travel on circulation around the heating plates (10, 11, 12).

## Revendications

1. Presse de laminage à plusieurs étages dévolue au laminage, sous l'action de la pression et de la chaleur, de pièces à usiner (20, 21) substantiellement en forme de plaques, comprenant :
- un certain nombre de panneaux chauffants (10, 11, 12), agencés en superposition et mobiles les uns par rapport aux autres ;
- un certain nombre de bandes convoyeuses (30, 31, 32) en révolution autour desdits panneaux chauffants (10, 11, 12) et présentant, respectivement, un brin supérieur (30a, 31a, 32a) et un brin inférieur (30b, 31b, 32b) ;
- des éléments d'étanchement (80, 81, 82, 110, 111, 112) interposés entre lesdits panneaux chauffants (10, 11, 12) et lesdites bandes convoyeuses (30, 31, 32) en vue de former, à l'état fermé de la presse, des chambres de dépression entre un premier panneau chauffant (11) considéré et un second panneau chauffant sus-jacent (10) respectivement voisin, cependant que le brin inférieur (30b) de la seconde bande convoyeuse (30) dudit second panneau chauffant (10) est en applique sur le brin supérieur (31a) de la première bande convoyeuse (31) dudit premier panneau chauffant (11) et que la pièce à usiner (20), destinée au laminage, se trouve dans la chambre de dépression entre ledit brin supérieur (31a) de la première bande convoyeuse (31) et ledit brin inférieur (30b) de la seconde bande convoyeuse (30) ; et
- des moyens (90, 91, 92, 100, 101, 102) de sollicitation par pression et/ou de création d'un vide dans lesdites chambres de dépression,
**caractérisée par le fait**
**que** les chambres de dépression sont respectivement délimitées, sans interposition d'une membrane, d'une part par le premier panneau chauffant (11) et, d'autre part, par le brin inférieur (30b) de la seconde bande convoyeuse (30), voire, d'une part par le second panneau chauffant (10) et, d'autre part, par le brin supérieur (31a) de la première bande convoyeuse (31).

2. Presse de laminage à plusieurs étages selon la revendication 1,
**caractérisée par le fait**
**que** les panneaux chauffants (10, 11, 12) sont pourvus d'évidements (70, 71, 72), afin de former les chambres de dépression et/ou des chambres de pression.

3. Presse de laminage à plusieurs étages selon l'une des revendications 1 ou 2,
**caractérisée par le fait**
**que** les brins supérieurs (30a, 31a, 32a) des bandes convoyeuses (30, 31, 32) présentent des propriétés matérielles autres que celles des brins inférieurs (30b, 31b, 32b) desdites bandes.

4. Presse de laminage à plusieurs étages selon au moins l'une des revendications 1 à 3,
**caractérisée par le fait**
**que** les brins supérieurs (30a, 31a, 32a) des bandes convoyeuses (30, 31, 32) présentent, en épaisseur et/ou en largeur, des cotes géométriques autres que celles des brins inférieurs (30b, 31b, 32b) desdites bandes.

5. Presse de laminage à plusieurs étages selon l'une des revendications 3 ou 4,
**caractérisée par le fait**
**que** les brins inférieurs (30b, 31b, 32b) et les brins supérieurs (30a, 31a, 32a) des bandes convoyeuses sont respectivement fixés, les uns aux autres, à l'aide d'au moins deux pièces amovibles (60, 61, 62) de liaison desdites bandes.

6. Presse de laminage à plusieurs étages selon au moins l'une des revendications 1 à 5,
**caractérisée par le fait**
**que** les bandes convoyeuses (30, 31, 32) sont munies d'éléments tendeurs (40, 41, 42, 50, 51, 52) qui tendent lesdites bandes convoyeuses (30, 31, 32) lors de la révolution autour des panneaux chauffants (10, 11, 12), tandis qu'ils soulagent lesdites bandes convoyeuses (30, 31, 32) lors de la fermeture de la presse.

7. Presse de laminage à plusieurs étages selon au moins l'une des revendications 1 à 6,
**caractérisée par le fait**
**que** soit le brin inférieur (30b) de la seconde bande convoyeuse (30), soit le brin supérieur (31a) de la première bande convoyeuse (31) de chaque étage de ladite presse, ne recouvre pas les éléments d'étanchement (80, 111) sur toute la surface, et/ou est doté d'orifices d'aspiration.

8. Presse de laminage à plusieurs étages selon au moins l'une des revendications 1 à 7,
**caractérisée par le fait**
**que** les bandes convoyeuses (30, 31, 32) effectuent un tour complet autour des panneaux chauffants (10, 11, 12) en vue de l'amenée et de l'enlèvement des pièces (20, 21).

9. Presse de laminage à plusieurs étages selon au moins l'une des revendications 1 à 8,
**caractérisée par**
la présence d'au moins un dispositif de nettoyage (120, 121, 122), en regard duquel les bandes convoyeuses (30, 31, 32) exécutent un mouvement lors de la révolution autour des panneaux chauffants (10, 11, 12).
